# EUROPEAN PATENT SPECIFICATION

(11) **EP 1 772 496 B1**
(45) Date of publication and mention of the grant of the patent: **30.03.2011**
(21) Application number: 07001446.9
(22) Date of filing: 11.09.2000
(51) Int. Cl.: C09D 9/00, C09D 9/04, C11D 3/20, C11D 11/00, C11D 1/37

(54) **Graffiti remover, paint stripper, degreaser**
Graffitientferner, Farbablöser, Entfetter
Décapant pour graffitis, dissolvant pour peinture, produit dégraissant

(30) Priority: 22.09.1999 US 155330 P; 22.08.2000 US 643141
(43) Date of publication of application: 11.04.2007
(62) Divisional of application: 00963381.9
(73) Proprietor: Cognis IP Management GmbH, 40589 Düsseldorf (DE)
(72) Inventor: Barabash, Martin, Jamesburg, NJ 08831 (US); Gross, Stephen F., Souderton PA 18964 (US); Hessel, John F., Doylestown PA 18901 (US)

(56) References cited:
- WO-A-00/52128
- US-A- 4 666 626

## Description

### BACKGROUND OF THE INVENTION

The present invention generally relates to a cleaning composition.

More particularly, the invention relates to a novel cleaning formulation having superior cleaning ability which is readily biodegradable, low in toxicity and volatility, neutral in pH and primarily naturally derived.

General purpose household cleaning compositions for hard surfaces such as metal, glass, ceramic, plastic and linoleum surfaces are commercially available in both powdered and liquid form. Powdered cleaning compositions consist mainly of builder or buffering salts such as phosphates, carbonates, and silicates and although such composition may display good inorganic soil removal, they exhibit inferior cleaning performance on organic soils such as greasy/fatty/oily soils.

Liquid cleaning compositions, on the other hand, have the great advantage that they can be applied onto hard surfaces in a neat or concentrated form so that a relatively high level of surfactant material is delivered directly to the soil. Moreover, it is a rather more straightforward task to incorporate high concentrations of anionic or nonionic surfactant in a liquid rather than a granular composition. For both of these reasons, therefore, liquid cleaning compositions have the potential to provide superior grease and oily soil removal over powdered cleaning compositions.

I Nevertheless, liquid cleaning compositions suffer a number of drawbacks which can limit their consumer acceptability. They generally contain little or no detergency builder salts and consequently they tend to have poor cleaning performance on particulate soil and also lack effectiveness under varying water hardness levels. In addition, they can suffer problems relating to homogeneity, clarity, and viscosity when used by consumers. Moreover, the higher in-use surfactant concentration necessary for improved grease and soil removal causes further problems relating to extensive suds formation which requires frequent rinsing and wiping on the part of the consumer.

One solution to the above-identified problems has involved the use of saturated and unsaturated terpenes, in combination with a polar solvent, in order to increase the cleaning effectiveness of the hard surface cleaner and control sudsing. A problem associated with the use of terpenes such as, for example, d-limonene, is that their price, as a raw material, tends to fluctuate wildly. Consequently, the cost to manufacture hard surface liquid cleaners containing terpene solvents is financially disadvantageous to both producers and consumers. WO 00/52128 discloses hard surface cleaning compositions which are terpene-free containing C1-C4 alkyl esters of a C6-C22 saturated and unsaturated carboxylic acid as primary solvent together with a co-surfactant and water. This document does not unambiguously disclose the use of a cyclic ketone as further ingredient of such terpene-free compositions. In US 4,666,626 non-methylene chloride paint striper compositions are described consisting of oxo-hexyl acetate and cyclohexanon. Dodecylbenzensulfonat is mentioned as surface active agent but this document also discloses the use of aromatic solvents.

Other solvents which are often employed in hard surface cleaning compositions, instead of terpenes, include those derived from aliphatic, aromatic and halogenated hydrocarbons. Their use, however, is undesirable for environmental reasons due to their limited biodegradation. Consequently, it would be highly desirable to employ a solvent which is both readily biodegradable and is not subject to any significant fluctuations in pricing for the raw material.

### BRIEF SUMMARY OF THE INVENTION

A terpene-free cleaning composition having as pH less than 9 comprising:
(a) from 2 to 12% by weight of an oil-soluble anionic surfactant;
(b) from 0.2 to 6% by weight of a water-soluble anionic surfactant;
(c) from 25 to 65% by weight of a primary solvent consisting of a C₆-C₁₄ methyl ester solvent
(d) from 2 to 14% by weight of a short-chain cosurfactant; and
(e) from 1 to 35% by weight of a cyclic ketone; and
(f) remainder, water, all weights being based on the total weight of the composition.

### DETAILED DESCRIPTION OF THE INVENTION

Other than in the operating examples, or where otherwise indicated, all numbers expressing quantities of ingredients or reaction conditions used herein are to be understood as being modified in all instances by the term "about".

The removal of undesirable aged paints, coatings, greases, and the like from various substrates is accomplished by two mechanisms, namely, dissolution and lifting. Dissolution is when the undesirable material is dissolved from the substrate by a solvent. Lifting is when the solvent penetrates into the undesirable material and causes it to swell. As a result of the swelling the material, whether it be a paint, coating or the like, wrinkles and lifts (separates) from the substrate, allowing it to then be easily removed from the substrate's surface.

It has surprisingly been discovered that a highly effective cleaning composition, free of terpenes, which possesses both the dissolution and lifting mechanisms, can be formulated by combining a C₁₋₄ alkyl ester of a C₆₋₂₂ saturated or unsaturated carboxylic acid, acting as a primary solvent to facilitate dissolution, with a cyclic ketone which provides the lifting mechanism.

The primary solvent used in the present invention is a C₆-C₁₄ methyl ester. The use of an alkyl ester as a solvent in cleaning compositions is significantly more desirable than conventional solvents, such as terpenes and hydrocarbon derivatives, for both environmental and economic reasons.

The methyl esters are derived by the esterification of a fatty acid with methanol. Preferred methyl esters are those derived from the esterification of unsaturated fatty acids having from about 8 to about 10 carbon atoms. Suitable fatty acids from which the fatty acid esters may be derived include, but are not limited to, coconut and other vegetable oils, tallow, etc. Suitable cyclic ketones for use in the cleaning composition of the present invention include, but are not limited to, cyclopentanone, cyclohexanone, cycloheptanone, and the like. A particularly preferred cyclic ketone is cyclohexanone.

The above-disclosed composition can be applied onto any type of substrate having an undesirable paint, coating or other material thereon, in order to dissolve and/or lift it there from. According to another aspect of the present invention, there is provided a terpene-free cleaning composition having improved high and low temperature stability which may also be easily rinsed from a cleaned surface.

These properties are imparted to the composition through the use of oil- soluble and/or water-soluble anionic surfactants. Suitable oil-soluble anionic surfactants which may be employed in the present invention include, but are not limited to, amine salts of dodecylbenzenesulfonic acid, calcium salts of dodecylbenzenesulfonic acid, and phosphate esters. A particularly preferred oil-soluble anionic surfactant is the isopropylamine salt of dodecylbenzenesulfonic acid.

Suitable water-soluble anionic surfactants which may be employed in the present invention include, but are not limited to, water-soluble salts of alkyl benzene sulfonates, alkyl sulfates, alkyl polyethoxy ether sulfates, paraffin sulfonates, alpha-olefin sulfonates and sulfosuccinates, alpha- sufocarboxylates and their esters, alkyl glyceryl ether sulfonates, fatty acid monoglyceride sulfates and sulfonates, and alkyl phenol polyethoxyether sulfates.

Other suitable water-soluble anionic surfactants include the water- soluble salts or esters of alpha-sulfonated fatty acids containing from about 6 to about 20 carbon atoms in the fatty acid group and from about 1 to about 10 carbon atoms in the ester group. Particularly preferred anionic surfactants for use in the present invention include the isopropylamine salt of a C₁₀₋₁₄ alkyl benzene sulfonic acid, and/or a C₈₋₁₁ fatty alcohol sulfate.

Another consideration that needs to be taken into account when formulating a terpene-free cleaning composition in accordance with the present invention relates to the cost of each individual component. In order to reduce costs, it is advisable to introduce a certain amount of water into the composition, thereby reducing the amount of actives needed to formulate the cleaning composition.

However, in order to maintain a high level of cleaning capability in the water containing version of the cleaning composition, it is advisable that a co- surfactant, preferably a short-chain co-surfactant, also be employed in the composition. Suitable short-chain co-surfactants for use in the present invention include, but are not limited to, C₃-C₆, alcohols, glycols, glycol ethers, pyrrolidones and glycol ether esters. A particularly preferred short- chain co-surfactant is propylene glycol n-butyl ether.

there is provided a terpene-free cleaning composition according claim 1 comprising: (a) from about 2 to about 12% by weight, preferably from about 4 to about 10% by weight, and most preferably from about 6 to about 8% by weight, of an oil-soluble anionic surfactant, (b) from about 0.2 to about 6% by weight, preferably from about 0.5 to about 3% by weight, and most preferably from about 1 to about 2% by weight, of a water-soluble anionic surfactant, (c) from about 3 to about 96% by weight, preferably from about 25 to about 65% by weight, and most preferably from about 40 to about 50% by weight, of a C₆-C₁₄ methyl ester solvent, (d) from about 2 to about 14% by weight, preferably from about 5 to about 12% by weight, and most preferably from about 8 to about 10% by weight, of a short-chain cosurfactant, and (e) remainder, water, all weights being based on the total weight of the composition.

The advantage of employing a cyclic ketone in the cleaning composition of the present invention is that it facilitates the removal of paints and coatings having a polymeric matrix such as, for example, polyurethane, epoxy, and alkyd enamels. Therefore, in those instance where the removal of polymeric coating compositions is desired, a cyclic ketone should be incorporated into the composition in an amount of from about 1 to about 35% by weight, preferably from about 5 to about 25% by weight, and most preferably from about 10 to about 20% by weight, based on the weight of the composition.

Since methyl esters are subject to hydrolysis under alkaline conditions, it is imperative that the pH of the hard-surface cleaning composition be less than about 9, and preferably in the range of from about 6 to about 9. The terpene-free cleaning composition of the present invention may be employed as either a neat solution or a microemulsion. Its use as a microemulsion, however, affords it the greatest degree of cost/performance.

In this form it is an oil continuous microemulsion characterized by a high level of thermal stability, ranging from about 10 to about 70°C. However, in order to achieve this level of thermal stability, the methyl ester component and water should be present in the composition in a ratio by weight of from about 50:1 to about 1:4, preferably from about 5:1 to about 1:2, and most preferably about 1.5:1. Auxiliaries may be incorporated into the cleaning composition of the present invention without departing from the spirit thereof. Examples of suitable auxiliaries which may be used include, but are not limited to, nonionic surfactants, amphoteric surfactants, zwitterionic surfactants, pH buffering agents, corrosion inhibitors, dyes, perfumes, enzymes, preservatives, thickeners, hydrotropes, and the like.

According to another embodiment of the present invention, there is provided a process for cleaning a hard surface involving contacting the hard surface with the above-disclosed composition. The cleaning compositions according to the invention can be used in a wide variety of applications which include, but are not limited to, the removal of grease, oil, ink, chewing gum and paint from hard and porous surfaces including all kinds of natural and synthetic fabrics in both industrial- institutional and consumer applications. Examples of the disparate types of applications include, but are not limited to, the use of the cleaning compositions according to the invention as water rinsable paint brush cleaners for brushes having both natural and synthetic bristles. Another use is as a cleaner for human skin and nails such as hand and finger nail cleaner for the removal of paints, greases, glues, nail polish and the like. The cleaning compositions according to the invention can also be used as a spot cleaner for removing grease, oil and paints from carpets and rugs and as a prespotter in laundry applications for the removal of stains from fabrics. Other applications include the removal of grease such as lithium and molybdenum greases from steel and concrete surfaces such as, for example, wheel bearings or garage floors having grease and oil stained tire tracks and the like. The cleaning compositions according to the invention can also be used to clean the concrete and metal surfaces of off-shore oil drilling platforms.

The cleaning compositions according to the invention can also contain an effective amount of odor masking agents such as natural products, for example, essential oils; aroma chemicals; perfumes and the like.

Examples of natural products include, but are not limited to, ambergris, benzoin, castoreum, civet, clove oil, galbanum, jasmine, rosemary oil, sandalwood, and the like. Examples of aroma chemicals include, but are not limited to, isoamyl acetate (banana); isobutyl propionate (rum); methyl anthranilate (grape); benzyl acetate (peach); methyl butyrate (apple); ethyl butyrate (pineapple); octyl acetate (orange); n-propyl acetate (pear); ethyl phenyl acetate (honey). The cleaning compositions according to the invention can contain any combination of the above types of compounds. An effective amount of such odor masking agents in the cleaning compositions according to the invention is any amount necessary to produce an odor masking effect or reduce an unwanted odor to an acceptable level. Such an amount will be readily determinable by those skilled in the art. The amount of odor masking agent will typically vary from about 0.25% to about 2.50% by weight of the cleaning composition with the preferred amount being from about 0.4% to about 1.0%.

The cleaning compositions according to the invention can be packaged in a variety of containers such as steel, tin, and aluminum cans and plastic and glass bottles. The cleaning compositions can be applied by a variety of application means which include, but are not limited to, spraying such as in aerosol form or other spraying means such as by standard spray nozzles when used to remove dirt and grime from trucks and railroad cars; brush application; dipping; coating; application in gel form such as from a squeeze bottle or brush. The cleaning compositions according to the invention can be formulated in gel form by the addition of an effective amount of a gelling agent such as fumed silica, organic gums, polymers, copolymers, paraffin wax, bentonite clay, and cellulose ethers such as methyl cellulose and hydroxypropyl methyl cellulose commercially available as METHOCEL® cellulose ethers, trademark products of Dow Chemical.

An in-can corrosion problem can arise when the cleaning compositions according to the invention are packaged in cans. Cans, and particularly aerosol cans, are generally made from steel and are, therefore, susceptible to corrosion by products containing water. Products containing water, such as the composition according to the invention, require the addition of a corrosion inhibitor to prevent corrosion of the can and contamination of the formulation in the can. When the formulation according to the invention is in the form of a microemulsion, the microemulsion is susceptible to destabilization by the addition of ions to the formulation. It is therefore necessary to use a corrosion inhibitor that will not contribute to the destabilization of the microemulsion.

Corrosion inhibitors that are compatible with the microemulsion composition according to the invention must be selected such that they do not contribute an amount of ions to the formulation that will destabilize the microemulsion.

Preferably the inhibitor will be a molecule that has both an oil soluble portion and a water soluble portion. It has been found that an amphoteric surfactant containing an amine functionality in an amount of from about 0.05% to about 2% by weight, and preferably from about 0.25 % to about 1.0%, acts as a corrosion inhibitor when combined with the microemulsion composition according to the invention, does not break the microemulsion and is effective in prevention of corrosion. Examples of suitable corrosion inhibitors include the DERIPHAT® amphoteric surfactants, particularly advantageous is IDERIPHAT® 151-C, available from Henkel Corporation, Ambler PA. Other corrosion inhibitors that can be used with the composition according to the invention include, but are not limited to, amine soaps of fatty acids and fatty alkanolamides such as the C₈ to C₁₈ fatty alkanolamides, examples of which include STANDAMID® alkanolamides, available from Henkel Corporation.

Such corrosion inhibitors can also be used for post-application anti- corrosion effects on surfaces that will rust or corrode because of the presence of water in the cleaning compositions according to the invention such as on metal surfaces such as iron and steel and the like. The amount of the corrosion inhibitors required for post-application purposes is any amount effective to inhibit or prevent corrosion of a metal surface onto which the cleaning compositions according to the invention are applied.

It should be noted that additional auxiliaries may also be incorporated into the hard surface cleaning composition of the present invention without departing from the spirit of the invention. Examples of suitable auxiliaries which may be used include, but are not limited to, amphoteric surfactants, zwitterionic surfactants, pH buffering agents, dyes, perfumes, enzymes, preservatives, thickeners, hydrotropes, corrosion inhibitors and the like.

A particularly preferred auxiliary component for use in the present invention is a thickening agent used for thickening the composition. Employing a thickening agent in the composition enables the composition to be applied onto vertical surfaces without any attendant dripping or run- off therefrom, and also inhibits dissipation of the composition into porous substrates such as brick or concrete. While any suitable thickening agent may be employed including, but not limited to, stearates and organoclay compounds; a particularly preferred thickening agent is tetraalkyl ammonium bentonite due to its stability over a broad temperature range. The thickening agent will typically be used in an amount of from about 0.1 to about 12% by weight, preferably from about 1 to about 8% by weight, and most preferably from about 2 to about 4% by weight, based on the weight of the composition.

In some cases it is desirable to package the cleaning compositions, according to the invention, in cans, such as aerosol cans to facilitate application of the cleaning compositions in the field. Cans, and particularly aerosol cans, are generally made from steel, so are susceptible to corrosion by products containing water. Products containing water, such as the composition according to the invention, require the addition of a corrosion inhibitor to prevent corrosion of the can and contamination of the formulation in the can. When the formulation according to the invention is in the form of a microemulsion, the microemulsion is susceptible to destabilization by the addition of ions to the formulation. It is therefore necessary to use a corrosion inhibitor that will not contribute to the destabilization of the microemulsion.

Corrosion inhibitors that are compatible with the microemulsion composition according to the invention must be selected such that they do not contribute an amount of ions to the formulation that will destabilize the microemulsion.

Preferably the inhibitor will be a molecule that has both an oil soluble portion and a water soluble portion. It has been found that an amphoteric surfactant containing an amine functionality in an amount of from about 0.05% to about 2% by weight, and preferably from about 0.25% to about 1.0%, acts as a corrosion inhibitor when combined with the microemulsion composition according to the invention, does not break the microemulsion and is effective in prevention of corrosion. Examples of suitable corrosion inhibitors include the IDERIPHAT® amphoteric surfactants, particularly advantageous is IDERIPHAT® 151-C, available from Henkel Corporation, Ambler PA. Other corrosion inhibitors that can be used with the composition according to the invention include, but are not limited to, amine soaps of fatty acids and fatty alkanolamides such as the C₈ to C₁₈ fatty alkanolamides, examples of which include STANDAMID® alkanolamides, available from Henkel Corporation.

As set forth above, the precise amount of alkyl ester solvent in general, and methyl ester solvent, in particular, present in the composition depends on the type of cleaning to be performed. Hence, if a hard surface is to be completely stripped of any and all coatings thereon, the amount of methyl ester solvent present in the composition will range from about 50 to about 95% by weight, based on the weight of the composition. Similarly, if an undesirable substance, such as graffiti, is to be removed from a coated hard surface without damaging the underlying coating, the amount of methyl ester solvent present in the composition will range from about 15 to about 50% by weight, based on the weight of the composition.

However, another variable associated therewith is the dwell-time of the composition. Thus, if a hard surface is to be completely stripped of any coating substances, as is the case in paint stripping, the dwell-time of the composition on the hard surface will range from about 20 to about 45 minutes. On the other hand, if an undesirable substance, such as graffiti, is to be removed from a coated hard surface without damaging the underlying coating, the dwell time of the composition on the hard surface will range from about 2 to about 20 minutes.

The present invention will be better understood by the examples which follow, all of which are intended for illustrative purposes only, and are not meant to unduly limit the scope of the invention in any way. Unless otherwise indicated, percentages are on a weight-by-weight basis.

### EXAMPLE

A terpene-free cleaning composition was prepared in accordance with the present invention. Its formulation is found in Table 1, below.

**Table 1**

| Component | % wt |
|---|---|
| C₈₋₁₀ methyl ester | 30.8 |
| cyclohexanone | 15.2 |
| isopropylamine salt of LAS acid | 8.4 |
| propylene glycol n-butyl ether | 9.3 |
| sodium lauryl sulfate (29%) | 4.0 |
| sodium octyl sulfate (40%) | 1.3 |
| water | 31.0 |

The physical characteristics of the above-disclosed composition are found Table 2, below.

**Table 2**

| Characteristic | Value |
|---|---|
| pH (as is) | 6.3 |
| %solids (1 hour, vacuum oven) | 9.36 |
| Specific Gravity, 25°C | 0.942 |
| Cloud point, lower | 46°F max |
| Cloud point, upper | 128°F min |
| Appearance, 1 cm test tube, 25°C | clear liquid |

## Claims

1. A terpene-free cleaning composition having a pH less than 9 comprising:
(a) from 2 to 12% by weight of an oil-soluble anionic surfactant;
(b) from 0.2 to 6% by weight of a water-soluble anionic surfactant;
(c) from 25 to 65% by weight of a primary solvent consisting of a C₆-C₁₄ methyl ester solvent
(d) from 2 to 14% by weight of a short-chain cosurfactant; and
(e) from 1 to 35% by weight of a cyclic ketone; and
(f) remainder, water, all weights being based on the total weight of the composition.

2. The composition of claim 1 wherein the oil-soluble anionic surfactant is selected from the group consisting of amine salts of dodecylbenzenesulfonic acid, calcium salts of dodecylbenzenesulfonic acid, phosphate esters and mixtures thereof.

3. The composition of claim 1 wherein the oil-soluble anionic surfactant is the isopropylamine salt of dodecylbenzenesulfonic acid.

4. The composition of claim 1 wherein the oil-soluble anionic surfactant is present in the composition in an amount of from 6 to 8% by weight, based on the weight of the composition.

5. The composition of claim 1 wherein the water-soluble anionic surfactant is selected from the group consisting of alkali metal salts of fatty acids, organic base salts of fatty acids, alkyl sulfates, alkyl ether sulfates, alkyl aromatic sulfonates, alkyl sulfonates, alpha olefin sulfonates, sulfosuccinates, and mixtures thereof.

6. The composition of claim 1 wherein the water-soluble anionic surfactant is C₈₋₁₄ fatty alcohol sulfate.

7. The composition of claim 1 wherein the water-soluble anionic surfactant is present in the composition in an amount of from 1 to 2% by weight, based on the weight of the composition.

8. The composition of claim 1 wherein the primary solvent is a C₈-C₁₀ methyl ester.

9. The composition of claim 1 wherein the primary solvent is present in the composition in an amount of from 40 to 50% by weight, based on the weight of the composition.

10. The composition of claim 1 wherein the short-chain co-surfactant is selected from the group consisting of C₃-C₆ alcohols, glycols, glycol ethers, pyrrolidones, glycol ether esters, and mixtures thereof.

11. The composition of claim 1 wherein the short-chain co-surfactant is propylene glycol n-butyl ether.

12. The composition of claim 1 wherein the short-chain co-surfactant is present in the composition in an amount of from 8 to 10% by weight, based on the weight of the composition.

13. The composition of claim 1 wherein the composition has a thermal stability ranging from 10 to 70 °C.

14. The composition of claim 1 wherein the primary solvent and water are present in the composition in a ratio by weight ranging from 50:1 to 1:4, preferably in the range from 1.5:1.

15. The composition of claim 1 wherein the cyclic ketone is cyclohexanone.

16. The composition of claim 15 wherein the cyclic ketone is present in the composition in an amount of from 10 to 20% by weight, based on the weight of the composition.

17. The composition of claim 15 wherein the primary solvent and cyclic ketone are present in the composition in a ratio by weight of from 10:1 to 1:10.

18. The composition of claim 15 wherein the primary solvent and cyclic ketone are present in the composition in ratio by weight of 2:1.

19. The composition of claim 1 further comprising a thickening agent.

20. The composition of claim 19 wherein the thickening agent is tetraalkyl ammonium bentonite.

## Patentansprüche

1. Ein terpenfreies Reinigungsmittel mit einem pH-Wert von weniger als 9, welches enthält:
a) von 2 bis 12 Gew.-% eines öllöslichen anionischen Tensids,
b) von 0,2 bis 6 Gew.-% eines wasserlöslichen anionischen Tensids,
c) von 25 bis 65 Gew.-% eines primären Lösungsmittels bestehend aus C6-C14 Methylesterlösungsmitteln,
d) von 2 bis 14 Gew.-% eines kurzkettigen Co-Tensids und
e) von 1 bis 35 Gew.-% eines zyklischen Ketons und
f) dem Rest Wasser
mit der Maßgabe, dass alle Gewichtsangaben auf dem Gesamtgewicht des Mittels basieren.

2. Das Mittel gemäß Anspruch 1, wobei die öllöslichen anionischen Tenside ausgewählt sind aus der Gruppe bestehend aus den Aminsalzen der Dodecylbenzolsulfonsäure, Kalziumsalzen der Dodecylbenzolsulfonsäure, Phosphatestern und Mischungen davon.

3. Die Mittel gemäß Anspruch 1, wobei das öllösliche Tensid ein Isopropylaminsalz der Dodecylbenzolsulfonsäure ist.

4. Das Mittel gemäß Anspruch 1, wobei das öllösliche anionische Tensid im Mittel in Mengen von 6 bis 8 Gew.-% enthalten ist, basierend auf dem Gewicht des Mittels.

5. Das Mittel gemäß Anspruch 1, wobei die wasserlöslichen anionischen Tenside ausgewählt sind aus der Gruppe bestehend aus den Alkalimetallsalzen von Fettsäuren, organische basische Salze von Fettsäuren, Alkylsulfaten, Alkylethersulfaten, alkylaromatischen Sulfaten, Alkylsulfonaten, Alpha-Olefinsulfonaten, Sulfosuccinaten und Mischungen davon.

6. Das Mittel gemäß Anspruch 1, worin das wasserlösliche Aniontensid ein C8-C14 Fettalkoholsulfat ist.

7. Das Mittel gemäß Anspruch 1, worin die wasserlöslichen anionischen Tenside in Mengen von 1 bis 2 Gew.-% im Mittel enthalten sind, basierend auf dem Gesamtgewicht des Mittels.

8. Das Mittel gemäß Anspruch 1, worin das primäre Lösungsmittel ein C8-C10 Methylester ist.

9. Das Mittel gemäß Anspruch 1, worin das primäre Lösungsmittel in dem Mittel in Mengen von 40 bis 50 Gew.-% enthalten ist, basierend auf dem Gesamtgewicht des Mittels.

10. Das Mittel gemäß Anspruch 1, worin die kurzkettigen Co-Tenside ausgewählt sind aus der Gruppe bestehend aus C3-C6 Alkoholen, Glycolen, Glycolethern, Pyrrolidonen, Glycoletherestern und Mischungen davon.

11. Das Mittel gemäß Anspruch 1, worin das kurzkettige Co-Tensid ein Propylenglycol n-Buthylether ist.

12. Das Mittel gemäß Anspruch 1, worin die kurzkettigen Co-Tenside in dem Mittel in Mengen von 8 bis 10 Gew.-% enthalten sind, basierend auf dem Gesamtgewicht des Mittels.

13. Das Mittel gemäß Anspruch 1, worin dieses Mittel eine thermische Stabilität zwischen 10 und 70° C aufweist.

14. Das Mittel gemäß Anspruch 1, worin das primäre Lösungsmittel und Wasser in den Mitteln in einem Gewichtsverhältnis im Bereich von 50 : 1 bis 1 : 4 und vorzugsweise im Bereich von 1,5 : 1 enthalten sind.

15. Das Mittel gemäß Anspruch 1, worin das zyklische Keton Cyclohexanon ist.

16. Das Mittel gemäß Anspruch 15, worin das zyklische Keton in dem Mittel in Mengen von 10 bis 20 Gew.-% enthalten ist, basierend auf dem Gesamtgewicht des Mittels.

17. Das Mittel gemäß Anspruch 15, worin das primäre Lösungsmittel und das zyklische Keton in dem Mittel im Gewichtsverhältnis von 10 : 1 bis 1 : 10 enthalten sind.

18. Das Mittel gemäß Anspruch 15, worin das primäre Lösungsmittel und das zyklische Keton im Mittel in Mengenverhältnissen von 2 : 1 enthalten sind.

19. Das Mittel gemäß Anspruch 1, enthaltend zusätzlich einen Verdicker.

20. Das Mittel gemäß Anspruch 19, wobei der Verdicker ausgewählt ist aus Tetraalkylammoniumbentonid.

## Revendications

1. Composition de nettoyage sans terpènes ayant un pH inférieur à 9, comprenant :
(a) de 2 à 12 % en poids d'un tensioactif anionique soluble dans l'huile ;
(b) de 0,2 à 6 % en poids d'un tensioactif anionique soluble dans l'eau ;
(c) de 25 à 65 % en poids d'un solvant primaire constitué d'un solvant ester de méthyle en C₆-C₁₄ ;
(d) de 2 à 14 % en poids d'un co-tensioactif à chaîne courte ; et
(e) de 1 à 35 % en poids d'une cétone cyclique ; et
(f) le reste, de l'eau, tous les poids étant fondés sur le poids total de la composition.

2. Composition selon la revendication 1, dans laquelle le tensioactif anionique soluble dans l'huile est choisi dans le groupe constitué par les sels d'amines de l'acide dodécylbenzènesulfonique, les sels de calcium de l'acide dodécylbenzènesulfonique, les esters de phosphate et leurs mélanges.

3. Composition selon la revendication 1, dans laquelle le tensioactif anionique soluble dans l'huile est le sel d'isopropylamine de l'acide dodécylbenzènesulfonique.

4. Composition selon la revendication 1, dans laquelle le tensioactif anionique soluble dans l'huile est présent dans la composition en une quantité de 6 à 8 % en poids, par rapport au poids de la composition.

5. Composition selon la revendication 1, dans laquelle le tensioactif anionique soluble dans l'eau est choisi dans le groupe constitué par les sels de métaux alcalins d'acides gras, les sels de bases organiques d'acides gras, les sulfates d'alkyle, les éthers sulfates d'alkyle, les sulfonates aromatiques d'alkyle, les sulfonates d'alkyle, les sulfonates d'alpha-oléfines, les sulfosuccinates et leurs mélanges.

6. Composition selon la revendication 1, dans laquelle le tensioactif anionique soluble dans l'eau est un sulfate d'un alcool gras en C₈-C₁₄.

7. Composition selon la revendication 1, dans laquelle le tensioactif anionique soluble dans l'eau est présent dans la composition en une quantité de 1 à 2 % en poids, par rapport au poids de la composition.

8. Composition selon la revendication 1, dans laquelle le solvant primaire est un ester de méthyle en C₈-C₁₀.

9. Composition selon la revendication 1, dans laquelle le solvant primaire est présent dans la composition en une quantité de 40 à 50 % en poids, par rapport au poids de la composition.

10. Composition selon la revendication 1, dans laquelle le co-tensioactif à chaîne courte est choisi dans le groupe constitué par les alcools en C₃-C₆, les glycols, les éthers de glycol, les pyrrolidones, les esters d'éthers de glycol et leurs mélanges.

11. Composition selon la revendication 1, dans laquelle le co-tensioactif à chaîne courte est l'éther n-butylique de propylène glycol.

12. Composition selon la revendication 1, dans laquelle le co-tensioactif à chaîne courte est présent dans la composition en une quantité de 8 à 10 % en poids, par rapport au poids de la composition.

13. Composition selon la revendication 1, dans laquelle la composition a une stabilité thermique allant de 10 à 70 °C.

14. Composition selon la revendication 1, dans laquelle le solvant primaire et l'eau sont présents dans la composition en un rapport en poids allant de 50:1 à 1:4, de préférence dans la plage de 1,5:1.

15. Composition selon la revendication 1, dans laquelle la cétone cyclique est la cyclohexanone.

16. Composition selon la revendication 15, dans laquelle la cétone cyclique est présente dans la composition en une quantité de 10 à 20 % en poids, par rapport au poids de la composition.

17. Composition selon la revendication 15, dans laquelle le solvant primaire et la cétone cyclique sont présents dans la composition en un rapport en poids allant de 10:1 à 1:10.

18. Composition selon la revendication 15, dans laquelle le solvant primaire et la cétone cyclique sont présents dans la composition en un rapport en poids de 2:1.

19. Composition selon la revendication 1, comprenant également un agent épaississant.

20. Composition selon la revendication 19, dans laquelle l'agent épaississant est la bentonite de tétraalkylammonium.
